(19) Europäisches Patentamt
European Patent Office
Office européen des brevets

(11) Veröffentlichungsnummer: **0 254 040 B1**

(12) # EUROPÄISCHE PATENTSCHRIFT

(45) Veröffentlichungstag der Patentschrift: **07.04.93**

(51) Int. Cl.[5]: **C08K 5/00**, C09J 4/00, C09J 179/04

(21) Anmeldenummer: **87108845.6**

(22) Anmeldetag: **20.06.87**

(54) **Härter für Aminoplaste, seine Verwendung bei Flächenverleimungen von Holzwerkstoffen und Verfahren zum Flächenverleimen von Holzwerkstoffen.**

(30) Priorität: **21.06.86 DE 3620859**

(43) Veröffentlichungstag der Anmeldung:
**27.01.88 Patentblatt 88/04**

(45) Bekanntmachung des Hinweises auf die Patenterteilung:
**07.04.93 Patentblatt 93/14**

(84) Benannte Vertragsstaaten:
**AT BE CH DE ES FR GB IT LI NL SE**

(56) Entgegenhaltungen:
**EP-A- 0 184 646**
**DE-A- 2 715 820**

**CHEMICAL ABSTRACTS, Band 79, Nr. 22, 3. Dezember 1973, Seite 55, Zusammenfassung Nr. 127529r, Columbus, Ohio, US; & JP-A-73 48 532 (HOHNEN OIL, CO., LTD) 10-07-1973**

**Römpp, Chemie-Lexikon, 1981, S. 1554-1555**

(73) Patentinhaber: **BASF Aktiengesellschaft**
**Carl-Bosch-Strasse 38**
**W-6700 Ludwigshafen(DE)**

(72) Erfinder: **Lehmann, Gunter**
**Schlesier Strasse 4**
**W-6701 Birkenheide(DE)**
Erfinder: **Lehnert, Heinz**
**Anselm-Feuerbach-Strasse 11f**
**W-6710 Frankenthal(DE)**
Erfinder: **Siegler, Manfred**
**Udastrasse 4**
**W-6710 Frankenthal(DE)**
Erfinder: **Pitteroff, Walter, Dr.**
**In den Hahndornen 10**
**W-6719 Bobenheim(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



Rank Xerox (UK) Business Services
(3.10/3.5x/3.0.1)

## Beschreibung

Die Erfindung betrifft einen Härter für Aminoplastharze, seine Verwendung bei Flächenverleimungen von Holzwerkstoffen, sowie ein Verfahren zum Flächenverleimen von Holzwerkstoffen, bei dem der Härter eingesetzt wird.

Ein großer Teil der heute gebrauchten Holzwerkstoffe wird an der Oberfläche beschichtet. Als Beschichtungsmaterialien dienen dabei überwiegend Folien und Holzfurniere.

Verwendet man Folien zur Beschichtung (Kaschierung), so werden diese üblicherweise mit PVC-Heißsiegel-Klebern, Polyvinylacetat-Dispersionen, Polyurethan- oder Epoxyharzklebern sowie mit Aminoplast-Harzen, insbesondere Harnstoff-Formaldehyd-Harzen verklebt.

Die Anwendung von Harnstoff-Formaldehyd-Harzen bringt einige Vorteile mit sich. So sind diese Harze gegenüber den anderen Klebemitteln wesentlich preisgünstiger und zudem zeichnen sich die solchermaßen beschichteten Holzwerkstoffe u.a. durch eine gute und harte Oberfläche sowie durch gute Druck- und Wasserfestigkeit aus.

Im Falle der Holzfurniere werden hauptsächlich Aminoplast-Harze als Klebmittel eingesetzt.

Flächenverleimungen werden üblicherweise mit Formaldehyd-Harnstoffharzen durchgeführt, die einen hohen Anteil an Formaldehyd enthalten. Demzufolge können Rohspanplatten, die in der Emissionsklasse E 1 eingestuft sind, nach dem Überfurnieren in die Emissionsklasse E 2 geraten. Gleiches gilt bei Einsatz von Folien. Bei der Herstellung von Sperrholz, das nicht in Emissionsklassen eingestuft ist, führt die Verwendung dieser Leime insbesondere an den offenen Kanten zu starken Formaldehydemissionen.

In der Zeitschrift Holz- und Kunststoffverarbeitung 1/85, Seiten 78 ff ist unter dem Titel "Neue Erkenntnisse zur Formaldehydabgabe von Möbeln" ausgeführt, daß formalehydarme E 1- und E 2-Spanplatten durch Beschichtung emissionsträchtiger werden. Diese Zunahme findet sich vornehmlich bei der Beschichtung mit Furnieren und Dünnfolien. Als Ursache wird der z.Zt. noch sehr hohe Formalehydgehalt der meisten Furnierleime angegeben. In diesem Aufsatz sind für eine Rohplatte ohne Schmalflächenabdichtung Emissionswerte (bestimmt durch Gasanalyse) von 4,1 mg Formaldehyd/h•$m^2$ angegeben. Nach dem Furnieren der Platte liegt der Wert bei 12,2 mg Formaldehyd/h•$m^2$. Bei Schmalflächenabdichtung steigt der anfängliche Wert der Rohplatte von 2,9 mg Formaldehyd/h•$m^2$ auf 14,5 mg an. In der Druckschrift wird ausgeführt, daß durch Verminderung des Formaldehydanteils zwar die nachträgliche Formaldehydabgabe der Klebstoffe absinkt, wobei die Zugabe von Formaldehyd-bindenden Mitteln in gleicher Weise wirke, die formaldehydarmen Aminoplastklebstoffe werden jedoch insofern als nachteilig bezeichnet, als sie eine geringere Lagerstabilität, eine längere Härtungszeit und eine höhere Sprödigkeit nach Aushärtung aufweisen.

Da selbst bei Einsatz von E 1-Rohplatten das Überfurnieren z.B. mit Eiche mit vielen üblichen Furnierleimen bei niedrigen Preßtemperaturen (115°C) noch zu Gasanalysenwerten führt, die den E 1-Grenzwert überschreiten können, wird empfohlen, beim Aufleimen von Furnier oder Folie:

- Trägerplatten der Emissionklasse E 1 zu verwenden
- formaldehydarme Harze (Molverhältnis unter 1,6) oder Formaldehydfänger einzusetzen
- möglichst hohe Preßtemperaturen anzuwenden und
- den Leimauftrag gering zu halten.

Aus der DE-D-27 15 820 ist bekannt, daß bei Verwendung von Säuren mit einem pKs-wert < 2,5 sehr große Probleme im Hinblick auf die geschlossene Wartezeit auftreten, d.h. bei Verwendung von derartigen Säuren, beispielsweise Maleinsäure, ist mit sehr kurzer Lebensdauer der Leimflotte zu rechnen.

In der Zeitschrift "Holz als Roh- und Werkstoff" 32 (1974), Seite 409 ist ausgeführt, daß der Zusatz von Harnstoff zum Bindemittel als Formaldehydfänger zwar günstig ist, daß aber gleichzeitig eine unerwünschte Erhöhung der Dickenquellung der Platten auftritt.

Schließlich wird in der DE-A 25 53 459 ausgeführt, daß formaldehyd-bindende Zusätze, insbesondere Harnstoff, die Weiterkondensation und damit die Aushärtung des Leimes verzögern und auch die Qualität des fertigen Spanholzwerkstoffes merklich verschlechtern können. So ist der Tabelle 3 dieser Druckschrift zu entnehmen, daß bei den ein formaldehydbindendes Mittel enthaltenden Leimansätzen A, B und D Biegefestigkeiten, Querzugfestigkeiten, Quellungen und Wasseraufnahme schlechter sind als bei den Leimansätzen der Vergleichsbeispiele. Aufgrund dieses Befundes ist von vornherein damit zu rechnen, daß auch bei der Flächenverleimung der Einsatz von formaldehyd-bindenden Mitteln, insbesondere von Harnstoff, zu denselben Nachteilen führt.

Der Erfindung liegt die Aufgabe zugrunde, einen Härter für Aminoplastharze zur Verfügung zu stellen, der mit den üblichen, formalehydreichen Harnstoff-Formaldehydharzen eine Flächenverleimung von Holzwerkstoffen erlaubt, die beim Einsatz von E 1-Rohspanplatten nicht zu einem Übersteigen des E 1-Grenzwertes führt. Hierbei soll die Anwendung hoher Preßtemperaturen vermieden werden, und trotz

üblicher Preßzeiten soll die Topfzeit der zur Verleimung gebrauchten Leimflotte verlängert werden.

Diese Aufgabe wird gelöst mit einem Härter für Aminoplastharze, der gekennzeichnet ist durch die Kombination der folgenden Bestandteile

(a) 30 bis 92,5 Gew.% einer Aminogruppen enthaltenden Verbindung, insbesondere Harnstoff und/oder Melamin,

(b) 5 bis 35 Gew.% eines Ammoniumsalzes einer anorganischen oder organischen Säure, insbesondere einer Mineraläure wie Ammoniumchlorid,

(c) 2 bis 30 Gew.% eines Guanamins, bevorzugt Benzoguanamin und

(d) 0,5 bis 10 Gew.% einer ein- oder mehrbasigen anorganischen oder organischen Säure mit einem pKa-Wert von < 2, insbesondere Maleinsäure

wobei sich Gew.% auf das Gesamtgewicht des Härters beziehen, und die Summe der Bestandteile 100 Gew.% ausmacht.

Nach einer bevorzugten Ausführungsform ist der erfindungsgemäße Härter gekennzeichnet durch

(a) 30 bis 92,5 Gew.% Harnstoff und/oder Melamin,

(b) 5 bis 35 Gew. % eines Ammoniumsalzes einer Mineralsäure,

(c) 2 bis 30 Gew.% Benzoguanamin und

(d) 0,5 bis 10 Gew.% Maleinsäure.

Besonders bevorzugt ist ein Härter, bei dem es sich um die Kombination der folgenden Bestandteile handelt:

(a) 30 bis 92,5 Gew.% Harnstoff

(b) 5 bis 35 Gew.% Ammoniumchlorid

(c) 2 bis 30 Gew.% Benzoguanamin und

(d) 0,5 bis 10 Gew.% Maleinsäure.

Besonders bevorzugt liegen die einzelnen Bestandteile a) bis d) des erfindungsgemäßen Härters in folgenden Mengen vor:

(a) 55 bis 90 Gew.%

(b) 15 bis 32 Gew.%

(c) 5 bis 15 Gew.%

(d) 0,9 bis 6 Gew.%.

Besonders bevorzugt ist ein erfindungsgamäßer Härter, dessen einzelne Bestandteile (a) bis (d) in den folgenden Mengen vorliegen:

(a) 58 bis 79 Gew.%

(b) 15 bis 32 Gew.%

(c) 5 bis 8 Gew.%

(d) 1,1 bis 2,4 Gew.%.

Der erfindungsgemäße Härter kann zusätzlich noch Füll- und/oder Streckmittel enthalten. Als Füllmittel kommen insbesondere Nußschalenmehl und Gesteinsmehl in Betracht. Als Streckmittel sind Getreide- oder Maismehl sowie Stärken besonders geeignet.

Wenn der Härter in fester Form verwendet wird, kann gegebenenfalls mit Vorteil ein staubverhinderndes Mittel, beispielsweise Öl, zugegeben werden.

Man kann den erfindungsgemäßen Härter als wäßrige Lösung einsetzen, gegebenenfalls können auch einzelne Bestandteile des Härters in Form einer wäßrigen Lösung zum Einsatz gelangen.

Die Erfindung betrifft auch ein Verfahren zum Flächenverleimen von Holzwerkstoffen durch Aufbringen einer flächigen Beschichtung von Aminoplastharz und Härter zwischen die zu verleimenden Werkstoffe und Härten der Aminoplastharze unter Anwendung von Druck und/oder Wärme, das dadurch gekennzeichnet ist, daß man einen wie zuvor definierten, erfindungsgemäßen Härter dem Aminoplastharz zugibt und härtet und bevorzugt bei einer Preßtemperatur von nicht mehr als 120°C verleimt und härtet. Ferner betrifft die Erfindung die Verwendung der wie zuvor definierten Härter bei der Flächenverleimung von Holzwerkstoffen.

Unter Flächenverleimung von Holzwerkstoffen wird ganz allgemein die flächige Beschichtung eines Rohwerkstoffs, beispielsweise einer Rohspanplatte, mit einem geeigneten Beschichtungsmaterial, beispielsweise einem Furnier, verstanden.

Selbst wenn man formaldehydreiche Harnstoff-Formaldehydleime einsetzt, wird beim Überfurnieren von E 1-Rohspanplatten der E 1-Grenzwert nicht überschritten. Darüber hinaus ist es nicht erforderlich, hohe Preßtemperaturen, d.h. Preßtemperaturen von über 120°C anzuwenden. Trotz üblicher Preßzeiten wird darüber hinaus die Topfzeit der Leimflotte erheblich verlängert. Dieser Befund ist besonders überraschend.

Es ist bekannt, daß Maleinsäure bei vielen Holzarten zu Verfärbungen führt. Überraschenderweise wird eine derartige Verfärbung beim erfindungsgemäßen Härter, der nach einer bevorzugten Ausfürhungsform als ein- oder mehrbasige anorganische oder organische Säure Maleinsäure enthält, nicht beobachtet.

Als Guanamine oder 2,4-Diamino-1,3,5-triazine der Formel

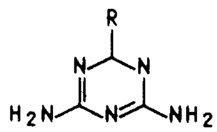

kommen z.B. Aceto-, Caprino-, Isobutyro- oder Benzoguanamin in Frage.

Nach einer bevorzugten Ausführungsformen enthält der erfindungsgemäße Härter Benzoguanamin. Es war anzunehmen, daß für den Einsatz von Benzoguanamin in Leimflotten im Vergleich zu Melamin das gleiche gilt wie für Benzoguanamin-Etherharze gegenüber Melamin-Etherharzen, nämlich eine verminderte Reaktionsfähigkeit. Gefunden wurde jedoch, daß bei Einsatz von Benzoguanamin die Preßzeiten üblich kurz waren, während die Gelierzeit bei 30 °C stark verlängert war.

Die Erfindung wird durch die nachstehenden Beispiele weiter erläutert.

Beispiele 1 bis 3 und Vergleiche A und B

Aus folgenden Teilen wurden Leimflotten hergestellt. Die angegebenen Teile sind Gewichtsteile.

Tabelle 1

| Ansatz | Vergleich A | Vergleich B | Beispiele 1 | Beispiele 2 | Beispiele 3 |
|---|---|---|---|---|---|
| Formaldehyd-Harnstoff-Harz Molverh. F:U = 1,85 65 %ig | 100 | 100 | 100 | 100 | 100 |
| Roggenmehl | 10 | 10 | 10 | 10 | 10 |

| Ansatz | Vergleich A | Vergleich B | Beispiele 1 | Beispiele 2 | Beispiele 3 |
|---|---|---|---|---|---|
| Härterbestandteile: | | | | | |
| Harnstoff | - | - | 11 | 11 | 9 |
| Benzoguanamin | - | - | 1 | 1 | 0,82 |
| $NH_4Cl$ | 1,5 | 1,0 | 4 | 2 | 1 |
| Maleinsäure | - | - | 0,3 | 0,3 | 0,15 |
| Wasser | 8,5 | 5,7 | - | 7,7 | 3,85 |

F = Formaldehyd U = Harnstoff

Mit diesen Flotten wurden 18 mm-Spanplatten mit einem Gasanalysenwert von 1,7 mg $HCHO/m^2 \cdot h$ beidseitig mit 0,6 mm Eichefurnier überfurniert. Preßbedingungen:

Druck: 0,6 N/mm

Temp.: 105 °C
Zeit: Mindestpreßzeit
Leimauftrag: 106 g/m²
Es wurden folgende Werte erreicht:

Tabelle 2

| Ansatz | Vergleich A | Vergleich B | Beispiele 1 | Beispiele 2 | Beispiele 3 |
|---|---|---|---|---|---|
| Gelierzeit 30°C/h | 0,75 | 0,82 | 2,9 | 2,2 | 2,1 |
| Gelierzeit 100°C/sec. | 25 | 29 | 30 | 28 | 30 |
| Mindestpreßzeit sec. | 25 | 32 | 30 | 30 | 32 |
| Gasanalysenwert mg $HCHO/m^2 \cdot h$ | 5,7 | 8,2 | 3,0 | 1,9 | 2,8 |

Keines der Furniere zeigte nach dem Verpressen irgendwelche Verfärbungen.

Der Tabelle 2 ist zu entnehmen, daß bei Verwendung des erfindungsgemäßen Härters die Gelierzeit bei 30 °C wesentlich erhöht ist. Die durch Gasanalyse bestimmte Formaldehydemission ist deutlich niedriger als bei den Vergleichsversuchen A und B. Die Mindestpreßzeiten sind vergleichbar.

## Patentansprüche

**1.** Als Härter für Aminoplastharze geeignete Mischungen aus
(a) 30 - 92,5 Gew.-% Harnstoff und/oder Melamin,
(b) 5 - 35 Gew. -% eines Ammoniumsalzes einer anorganischen oder organischen Säure,
(c) 2 - 30 Gew. -% eines Guanamins und
(d) 0,5 - 10 Gew.-% einer ein- oder mehrbasigen anorganischen oder organischen Säure mit einem $pK_a$-Wert von < 2.

**2.** Härter für Aminoplastharze gemäß Anspruch 1 dadurch gekennzeichnet, daß das Ammoniumsalz (b) das Ammoniumsalz einer Mineralsäure ist.

**3.** Härter für Aminoplastharze gemäß Anspruch 1 oder 2, dadurch gekennzeichnet, daß das Guanamin (c) Benzoguanamin ist.

**4.** Härter für Aminoplastharze gemäß Anspruch 1, 2 oder 3, dadurch gekennzeichnet, daß die Säure (d) Maleinsäure ist.

**5.** Härter für Aminoplastharze gemäß Anspruch 2, dadurch gekennzeichnet, daß das Ammoniumsalz (b) Ammoniumchlorid ist.

**6.** Härter nach einem der Ansprüche 1 bis 5, dadurch gekennzeichnet, daß die einzelnen Bestandteile (a) bis (d) in fogenden Mengen vorliegen:
(a) 55 bis 90 Gew.%
(b) 15 bis 32 Gew.%
(c) 5 bis 15 Gew.%
(d) 0,9 bis 6 Gew.%.

**7.** Verfahren zum Flächenverleimen von Holzwerkstoffen durch Aufbringen einer flächigen Beschichtung von Aminoplastharzen und Härter zwischen die zu verleimenden Werkstoffe und Härten der Aminoplastharze unter Anwendung von Druck und/oder Wärme, dadurch gekennzeichnet, daß man einen Härter gemäß einem der Ansprüche 1 bis 6 den Aminoplastharzen zugibt und dann härtet.

8. Verfahren gemäß Anspruch 7, dadurch gekennzeichnet, daß bei einer Preßtemperatur von nicht mehr als 120 ° C verleimt und gehärtet wird.

9. Verwendung des Härters nach einem der Ansprüche 1 bis 6 bei der Flächenverleimung von Holzwerkstoffen.

## Claims

1. A mixture suitable as a curing agent for aminoplast resins, comprising
   (a) 30 - 92.5% by weight of urea and/or melamine,
   (b) 5 - 35% by weight of an ammonium salt of an inorganic or organic acid,
   (c) 2 - 30% by weight of a guanamine and
   (d) 0.5 - 10% by weight of a monobasic or polybasic inorganic or organic acid having a $pK_a$ of <2.

2. A curing agent for aminoplast resins as claimed in claim 1, wherein the ammonium salt (b) is the ammonium salt of a mineral acid.

3. A curing agent for aminoplast resins as claimed in claim 1 or 2, wherein the guanamine (c) is benzoguanamine.

4. A curing agent for aminoplast resins as claimed in claim 1, 2 or 3, wherein the acid (d) is maleic acid.

5. A curing agent for aminoplast resins as claimed in claim 2, wherein the ammonium salt (b) is ammonium chloride.

6. A curing agent as claimed in any of claims 1 to 5, wherein the individual components (a) to (d) are present in the following amounts:
   (a) from 55 to 90% by weight,
   (b) from 15 to 32% by weight,
   (c) from 5 to 15% by weight and
   (d) from 0.9 to 6% by weight.

7. A process for bonding the surfaces of wood-base materials by applying a coat of an aminoplast resin and a curing agent between the materials to be bonded, and curing the aminoplast resin with the use of pressure and/or heat, wherein a curing agent as claimed in any of claims 1 to 6 is added to the aminoplast resin and curing is then effected.

8. A process as claimed in claim 7, wherein bonding and curing is effected at a press temperature of not more than 120 ° C.

9. Use of a curing agent as claimed in any of claims 1 to 6 for bonding the surfaces of wood-base materials.

## Revendications

1. Mélanges appropriés à une utilisation comme durcisseur pour résines aminoplastes, constitué de
   (a) 30 à 92.5% en poids d'urée et/ou de mélamine,
   (b) 5 à 35% en poids d'un sel d'ammonium d'un acide inorganique ou organique,
   (c) 2 à 30% en poids d'une guanamine et
   (d) 0,5 à 10% en poids d'un mono ou polyacide inorganique ou organique ayant une valeur de pka inférieure à 2.

2. Durcisseur pour résines aminoplastes selon la revendication 1, caractérisé en ce que le sel d'ammonium (b) est le sel d'ammonium d'un acide minéral.

3. Durcisseur pour résines aminoplastes selon la revendication 1 ou 2, caractérisé en ce que la guanamine (c) est la benzoguanamine.

4. Durcisseur pour résines aminoplastes selon la revendication 1, 2 ou 3, caractérisé en ce que l'acide (d) est l'acide maléique.

5. Durcisseur pour résines aminoplastes selon la revendication 2, caractérisé en ce que le sel d'ammonium (b) est le chlorure d'ammonium.

6. Durcisseur selon les revendications 1 à 5, caractérisé en ce que les constituants élémentaires (a) à (d) se trouvent dans les quantités suivantes :
   (a) 55 à 90 % en poids
   (b) 15 à 32 % en poids
   (c) 5 à 15 % en poids
   (d) 0,9 à 6 % en poids.

7. Procédé d'encollage de surface de bois par apport d'une couche superficielle de résines aminoplastes et de durcisseur entre les surfaces à encoller et par durcissement de la résine aminoplaste par application de pression et/ou de chaleur, caractérisé en ce que l'on ajoute aux résines aminoplastes un durcisseur selon l'une quelconque des revendications 1 à 6, puis en ce que l'on durcit.

8. Procédé selon la revendication 7, caractérisé en ce que l'on encolle et durcit à une température de presse n'excédant pas 120 ° C.

9. Utilisation du durcisseur selon l'une quelconque des revendications 1 à 6 pour l'encollage de surfaces de bois.